# EUROPEAN PATENT APPLICATION

(11) **EP 3 929 769 A1**
(43) Date of publication of application: **29.12.2021**
(21) Application number: 20217087.4
(22) Date of filing: 23.12.2020
(51) Int. Cl.: G06F 16/35, G06F 16/36, G06F 16/9535

(54) **INFORMATION RECOMMENDATION METHOD AND APPARATUS, ELECTRONIC DEVICE, AND READABLE STORAGE MEDIUM**

(30) Priority: 22.06.2020 CN 202010577208
(71) Applicant: BEIJING BAIDU NETCOM SCIENCE TECHNOLOGY CO., LTD., No.10 Shangdi 10th Street Haidian District Beijing 100085 (CN)
(72) Inventor: WANG, Haiwei, Beijing, 100085 (CN); WANG, Jie, Beijing, 100085 (CN); LIU, Zhun, Beijing, 100085 (CN); ZHU, Yong, Beijing, 100085 (CN); TIAN, Hao, Beijing, 100085 (CN); HE, Wei, Beijing, 100085 (CN)
(74) Representative: Carpmaels & Ransford LLP

(57) **Abstract**

The present disclosure provides an information recommendation method, which relates to a field of knowledge graph. The method includes: acquiring request information; extracting a request entity word representing an entity from the request information; determining recommendation information based on the request entity word and a pre-constructed knowledge graph; and pushing the recommendation information, wherein the knowledge graph is constructed based on a text, and the knowledge graph indicates a first word representing a source of the text. The present disclosure further provides an information recommendation apparatus, an electronic device and a computer-readable storage medium.

## Description

### TECHNICAL FIELD

The present disclosure relates to a field of knowledge graph, and in particular to an information recommendation method and apparatus, an electronic device, and a readable storage medium.

### BACKGROUND

With a development of Internet technology, in order to improve office efficiency and facilitate enterprise management, various artificial intelligence platforms to assist management have emerged.

In a process of realizing a concept of the present disclosure, the inventor found that the related art at least has the following technical feature: the artificial intelligence platforms in the related art mostly focus on information system construction, information classification and information sharing. However, when information recommendation is made in response to a search statement, it is often only possible to recommend information including keywords in the search statement to the user based on the search statement. Therefore, the artificial intelligence platforms in the related art have the technical problem that they lack deep mining and understanding of the user's intentions based on the search statement, and thus cannot recommend more abundant information to the user.

### SUMMARY

In view of this, the present disclosure provides an information recommendation method and apparatus that can deeply mine and understand users' needs and recommend abundant information to users, as well as an electronic device and a readable storage medium.

One aspect of the present disclosure provides an information recommendation method, including: acquiring request information; extracting a request entity word representing an entity from the request information; determining recommendation information based on the request entity word and a pre-constructed knowledge graph; and pushing the recommendation information, wherein the knowledge graph is constructed based on a text, and the knowledge graph indicates a first word representing a source of the text.

Alternatively, the information recommendation method further includes constructing the knowledge graph based on the text, wherein the constructing the knowledge graph based on the text further includes: extracting, from the text, a plurality of entity words representing the entity and an association relationship between the plurality of entity words, wherein the plurality of entity words contain the first word; and constructing the knowledge graph based on the extracted plurality of entity words and association relationship between the plurality of entity words.

Alternatively, the constructing the knowledge graph further includes: for each entity word of the plurality of entity words, constructing a node for the each entity word; determining an associated word in the plurality of entity words based on the association relationship between the plurality of entity words, the associated word having an association relationship with the each entity word; and connecting the node for the each entity word and a node for the associated word, so as to form an edge associated with the node for the each entity word.

Alternatively, the constructing the knowledge graph further includes: determining a degree of association between the each entity word and the associated word based on the association relationship between the each entity word and the associated word; and assigning, based on the degree of association, a weight to the edge connecting the node for the each entity word and the node for the associated word, wherein the degree of association is proportional to the weight.

Alternatively, the determining recommendation information further includes: determining a node for the request entity word in the knowledge graph as a target node; determining, based on an edge associated with the target node, at least one node connected with the target node; and determining the recommendation information based on an entity word being a target of the at least one node.

Alternatively, the information recommendation method further includes: in response to a new text being acquired, extracting, from the new text, a plurality of new entity words representing the entity and an association relationship between the plurality of new entity words; and updating the knowledge graph based on the plurality of new entity words and the association relationship between the plurality of new entity words in response to the knowledge graph failing to indicate at least one of the plurality of new entity words.

Alternatively, the information recommendation method further includes: extracting key information from the request information; and determining an information node in a preset key information structure as a target information node, wherein the information node is associated with the key information extracted, and the key information structure contains a plurality of information nodes each indicate a piece of key information, wherein the determining recommendation information further includes: determining the recommendation information based on the request entity word, the pre-constructed knowledge graph and the target information node.

Alternatively, the plurality of entity words further contain at least one second word for representing the key information of the text; the information recommendation method further includes: classifying the text into an information node contained in the key information structure, including: determining a matching relationship between the text and each information node in the key information structure based on the second word; and classifying the text into an information node matching the text.

Alternatively, the plurality of entity words contain a plurality of second words; the determining a matching relationship between the text and each information node in the key information structure includes: determining whether the second words contain a target word identical with key information indicated by the each information node or not; and determining the matching relationship between the text and the each information node as matching in response to the second words containing the target word.

Alternatively, the determining a matching relationship between the text and each information node in the key information structure further includes: acquiring an associated word of the second word from the knowledge graph in response to the second words not containing the target word; and determining the matching relationship between the text and the each information node as matching in response to the associated words of the second words containing the target word.

Alternatively, the determining a matching relationship between the text and each information node in the key information structure includes: determining a similarity between the second word and key information indicated by the each information node; and determining the matching relationship between the text and the each information node as matching in response to the similarity being greater than a similarity threshold.

Alternatively, the information recommendation method further includes: in response to a new text being acquired, extracting, from the new text, new key information of the new text; and updating the key information structure based on the new key information in response to the key information structure not containing an information node indicating the new key information.

Alternatively, the determining recommendation information further includes: acquiring a text classified into the target information node, as the recommendation information.

Another aspect of the present disclosure provides an information recommendation apparatus, including: an acquisition module configured to acquire request information; an information extraction module configured to extract a request entity word representing an entity from the request information; an information determination module configured to determine recommendation information based on the request entity word and a pre-constructed knowledge graph; and an information pushing module configured to push the recommendation information, wherein the knowledge graph is constructed based on a text, and the knowledge graph indicates a first word representing a source of the text.

Another aspect of the present disclosure provides an electronic device, including: one or more processors; and a storage device for storing one or more programs, wherein the one or more processors is configured to execute the one or more programs to acquire request information; extract a request entity word representing an entity from the request information; determine recommendation information based on the request entity word and a pre-constructed knowledge graph; and push the recommendation information, wherein the knowledge graph is constructed based on a text, and the knowledge graph indicates a first word representing a source of the text.

Another aspect of the present disclosure provides a non-transitory computer-readable storage medium having executable instructions stored thereon that, when executed by a processor, causes the processor to perform the above-mentioned information recommendation method.

Another aspect of the present disclosure provides a computer program including computer-executable instructions that, when executed, perform the above-mentioned information recommendation method.

### BRIEF DESCRIPTION OF THE ACCOMPANYING DRAWINGS

The above and other objects, features, and advantages of the present disclosure will be more apparent through the following description of embodiments of the present disclosure with reference to the accompanying drawings, in which:
FIG. 1 schematically shows an application scene of an information recommendation method and apparatus, an electronic device and a non-transitory readable storage medium according to an embodiment of the present disclosure;
FIG. 2 schematically shows a flowchart of the information recommendation method according to an embodiment of the present disclosure;
FIG. 3A schematically shows a flowchart of constructing a knowledge graph based on a text according to an embodiment of the present disclosure;
FIG. 3B schematically shows a flowchart diagram of acquiring the text for constructing the knowledge graph according to an embodiment of the present disclosure;
FIG. 3C schematically shows a flowchart of constructing the knowledge graph based on the text according to another embodiment of the present disclosure;
FIG. 4A schematically shows a flowchart of determining recommendation information according to an embodiment of the present disclosure;
FIG. 4B schematically shows a diagram of the principle of determining recommendation information based on the knowledge graph according to an embodiment of the present disclosure;
FIG. 5 schematically shows a flowchart of updating the knowledge graph according to an embodiment of the present disclosure;
FIG. 6A schematically shows a flowchart of the information recommendation method according to another embodiment of the present disclosure;
FIG. 6B schematically shows a diagram of a preset key information structure according to an embodiment of the present disclosure;
FIG. 7 schematically shows a flowchart of classifying the text into an information node contained in the key information structure according to an embodiment of the present disclosure;
FIG. 8 schematically shows a flowchart of determining a matching relationship between the text and each information node in the key information structure according to an embodiment of the present disclosure;
FIG. 9 schematically shows a flowchart of determining the matching relationship between the text and each information node in the key information structure according to another embodiment of the present disclosure;
FIG. 10 schematically shows a system architecture diagram for implementing the information recommendation method according to an embodiment of the present disclosure;
FIG. 11 schematically shows a structure block diagram of an information recommendation apparatus according to an embodiment of the present disclosure; and
FIG. 12 schematically shows a block diagram of an electronic device adapted for performing the information recommendation method according to an embodiment of the present disclosure.

### DETAILED DESCRIPTION

Hereinafter, embodiments of the present disclosure will be described with reference to the accompanying drawings. It should be understood, however, that these descriptions are merely exemplary and are not intended to limit the scope of the present disclosure. In the following detailed description, for ease of interpretation, many specific details are set forth to provide a comprehensive understanding of the embodiments of the present disclosure. However, it is clear that one or more embodiments may also be implemented without these specific details. In addition, in the following description, descriptions of well-known structures and technologies are omitted to avoid unnecessarily obscuring the concepts of the present disclosure.

The terms used herein are for the purpose of describing specific embodiments only and are not intended to limit the present disclosure. The terms "comprising", "including", etc. used herein indicate the presence of the feature, step, operation and/or part, but do not exclude the presence or addition of one or more other features, steps, operations or parts.

All terms used herein (including technical and scientific terms) have the meanings generally understood by those skilled in the art, unless otherwise defined. It should be noted that the terms used herein shall be interpreted to have meanings consistent with the context of this specification, and shall not be interpreted in an idealized or too rigid way.

In the case of using the expression similar to "at least one of A, B and C", it should be explained according to the meaning of the expression generally understood by those skilled in the art (for example, "a system having at least one of A, B and C" should include but not be limited to a system having only A, a system having only B, a system having only C, a system having A and B, a system having A and C, a system having B and C, and/or a system having A, B and C).

The embodiments of the present disclosure provide an information recommendation method and apparatus for improving the richness of recommended information and improving the user experience. The information recommendation method may first acquire request information received by the client. In response to the request information being acquired, a request entity word representing an entity is extracted from the request information. Then, the recommendation information is determined based on the request entity word and a pre-constructed knowledge graph. Finally, the recommendation information is pushed to the client, so as to display the recommendation information to the user. The knowledge graph is constructed based on a text, and the knowledge graph indicates a first word representing a source of the text. By this method, it is possible to recommend the source of desired knowledge to the user according to the knowledge graph indicating the source of the text. It is convenient for the user to quickly understand the information such as the team and experts studying the related knowledge, which improves the efficiency of knowledge development and application.

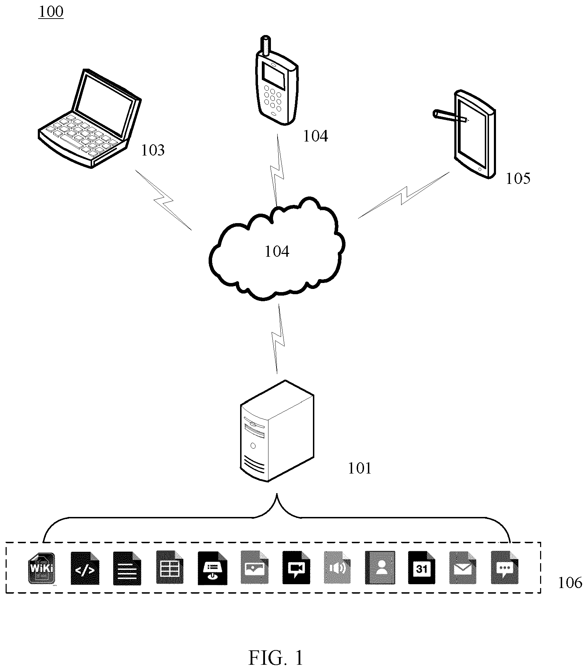

FIG. 1 schematically shows an application scene of an information recommendation method and apparatus, an electronic device and a readable storage medium according to an embodiment of the present disclosure. It should be noted that FIG. 1 is only an example of a system architecture in which the embodiments of the present disclosure may be applied, so as to help those skilled in the art to understand the technical content of the present disclosure. It does not mean that the embodiments of the present disclosure cannot be used for other apparatuses, systems or scenes.

As shown in FIG. 1, an application scene 100 of this embodiment may include a server 101, a network 102, and terminal devices 103, 104, 105. The network 102 is used to provide a medium of a communication link between the server 101 and the terminal devices 103, 104, 105. The network 102 may include various connection types, such as wired or wireless communication links, and so on.

The terminal devices 103, 104, 105 may be, for example, various electronic devices having a display screen and supporting web browsing, including but not limited to smart phones, tablet computers, laptop computers, desktop computers, and the like. The terminal devices 103, 104 and 105 may generate request information in response to a user operation, acquire recommendation information in response to the request information through an interaction with the server 101, and display the recommendation information to the user.

Exemplarily, the terminal devices 103, 104, 105 may be, for example, installed with various client applications, such as text editing applications, audio editing applications, video editing applications, instant messaging applications, intelligent office platforms, etc. (for example only).

The server 101 may, for example, maintain a knowledge management system based on the acquired information. The acquired information may include, for example, text information, video information and/or audio information acquired from a plurality of client applications installed on the terminal devices 103, 104, 105. The knowledge management system, for example, may construct and maintain a knowledge graph based on the acquired information, so as to form a visual structure of the association relationships between multiple pieces of information, which is convenient for information mining and recommendation.

Exemplarily, the server 101 may also, in response to the request information generated by the terminal devices 103, 104, 105 being acquired, determine the recommendation information recommended to the user based on the knowledge graph constructed and maintained by the server 101, and push the recommendation information to the terminal devices 103, 104, 105 for the user to browse.

Exemplarily, the server 101 may also be a knowledge management server set up for the enterprise, which manages and maintains the information uploaded by employees in the enterprise and the information generated during online office work. The knowledge graph may not only be constructed based on the acquired information, but also be constructed based on the source of the acquired information. The source of the acquired information may include: the information of the user who uploaded information, the information of the author and/or team who generated the information. When determining the recommendation information based on the knowledge graph, it is possible to mine the association relationship between the employee elements and the knowledge in the enterprise, so as to improve the efficiency of knowledge production and application of the enterprise. The information managed and maintained by the server may include information 106, for example. The information 106 may include information obtained from WiKi system, audio and/or text information generated during online meeting, files transmitted through online office platform, chat information generated through online office platform, and so on.

It should be noted that the information recommendation method provided by the embodiments of the present disclosure may generally be performed by the server 101. Accordingly, the information recommendation apparatus provided by the embodiments of the present disclosure may generally be arranged in the server 101.

It should be understood that the number and types of the terminal devices, network and server in FIG. 1 are merely illustrative. According to implementation needs, there may be any number and types of terminal devices, networks and servers.

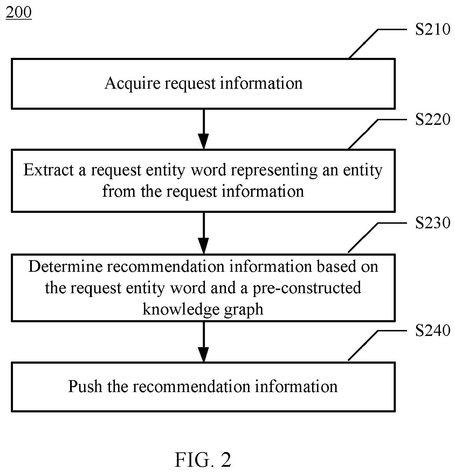

The information recommendation method according to the embodiments of the present disclosure will be described in detail below through FIG. 2 to FIG. 9 with reference to the application scene described in FIG. 1.

FIG. 2 schematically shows a flowchart of the information recommendation method according to an embodiment of the present disclosure.

As shown in FIG. 2, an information recommendation method 200 of this embodiment may include operations S210 to S240.

In operation S210, the request information is acquired.

According to the embodiment of the present disclosure, the request information may be generated by the terminal device in response to a user operation, for example. After generating the request information, the terminal device transmits the request information to the server to request recommendation information from the server.

Exemplarily, the user operation may be, for example, a user operation of inputting a search statement through an input device. Alternatively, the user operation may be a user operation of issuing a voice command to the terminal device. The request information generated by the terminal device is the information that may indicate the search statement or voice command and may be recognized by the server. For example, the request information may be a query statement.

In operation S220, a request entity word representing the entity is extracted from the request information.

According to the embodiment of the present disclosure, the operation S220 may first perform word segmentation on the request information to obtain a word sequence indicating the request information. Then, an entity recognition of the words in the word sequence is carried out, the words representing the entity are extracted, and the request entity word is obtained. Exemplarily, the request entity word may refer to information elements in the request information, such as person name, organization/institution name, object name, project name, and so on.

Exemplarily, in the operation S220, the request entity word may be extracted through a pre-trained machine learning model, for example. The machine learning model may include, for example, LSTM (Long Short-Term Memory), and the like.

Exemplarily, the operation S220 may filter and obtain the word belonging to the entity words from the plurality of words contained in the word sequence, for example, by comparing each word in the word sequence with the words in the entity word database. The word filtered and obtained is the request entity word of the entity.

In operation S230, the recommendation information is determined based on the request entity word and the pre-constructed knowledge graph.

According to the embodiment of the present disclosure, the knowledge graph is constructed based on a large number of texts. For example, the knowledge graph may be constructed based on the entity words and the association relationship between the entities represented by the entity words extracted from the texts. The knowledge graph includes a plurality of nodes and a plurality of edges connecting the nodes. Each node is directed to an entity word, that is, each node may represent an entity. Each edge is used to indicate that there is an association relationship between two entities represented by two connected nodes.

Exemplarily, in order to provide the user with more abundant information in response to the acquisition request, the plurality of nodes included in the knowledge graph may include, for example, a first word representing a source of the text. The first word may include the name of the author of the text, the name of the team or organization that generated the text, and so on. When the request entity word contains "Java", the recommendation information determined based on the knowledge graph may include, for example, experts and teams proficient in Java language in the enterprise.

According to the embodiment of the present disclosure, the operation S230 may first determine the node representing the request entity word in the knowledge graph. Then an entity having an association relationship with the entity represented by the request entity word is determined based on the position of the determined node in the knowledge graph. Finally, the recommendation information is generated based on the entity having the association relationship.

According to the embodiment of the present disclosure, the server may also maintain a text library including a plurality of texts uploaded by the terminal device. The operation S230 may also, for example, first acquire a text matching the request entity word from the text library according to the request entity word. Then an entity in the knowledge graph having an association relationship with the request entity word is determined. Finally, the recommendation information is generated based on the text acquired from the text library and the entity word having the association relationship.

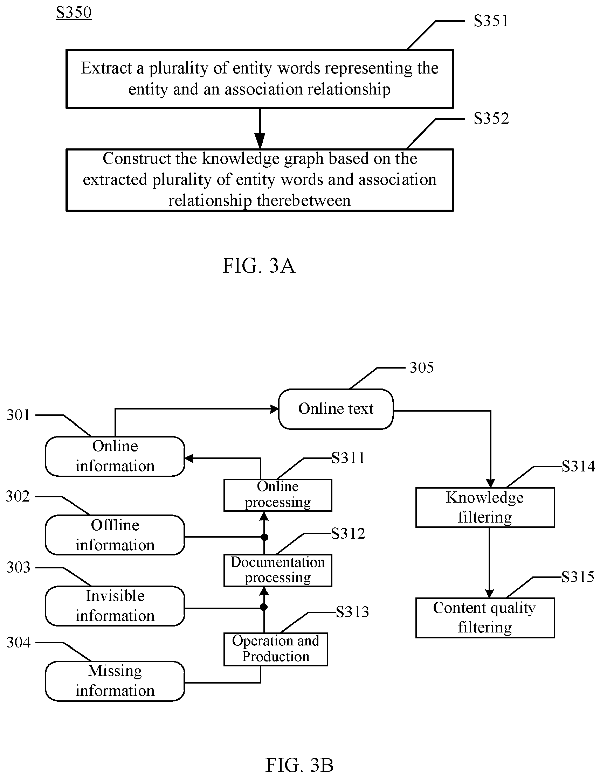

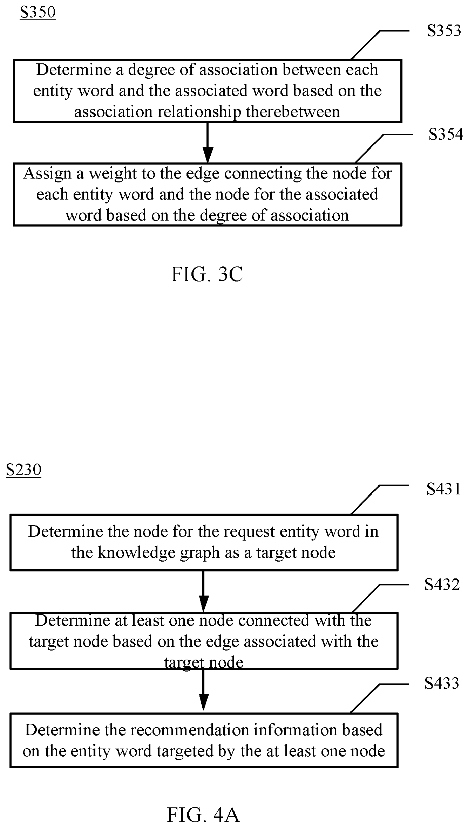

Exemplarily, the knowledge graph may be constructed by the process described in FIG. 3A, and the operation S230 may be implemented by the process described in FIG. 4A, which will not be described in detail here.

In operation S240, the recommendation information is pushed. In this operation, the recommendation information generated may be pushed to the terminal device so that the terminal device displays the recommendation information to the user.

In summary, when the embodiments of the present disclosure perform the information recommendation, by determining the recommendation information based on the knowledge graph indicating the text source, the source information for the request information, such as domain experts or teams, may be recommended to the user. Therefore, the information recommendation may be deep into the enterprise team and project management, so that more comprehensive and accurate information may be recommended to the user.

In order to facilitate the information recommendation based on the knowledge graph, the information recommendation method of this embodiment may further include the following operation performed prior to the operation S210: constructing the knowledge graph based on the text.

FIG. 3A schematically shows a flowchart of constructing a knowledge graph based on a text according to an embodiment of the present disclosure. FIG. 3B schematically shows a flowchart diagram of acquiring the text for constructing the knowledge graph according to an embodiment of the present disclosure.

As shown in FIG. 3A, operation S350 of constructing the knowledge graph based on the text may include operations S351 to S352.

In operation S351, a plurality of entity words representing the entity and the association relationship between the plurality of entity words are extracted from the text.

According to the embodiment of the present disclosure, in order to make the constructed knowledge graph cover more knowledge, the texts for extracting the entity words and the association relationship therebetween may include a plurality of texts acquired from a plurality of decentralized channels. The operation S351 is used to extract entity words and association relationships from each of the plurality of texts. After extracting the entity words and the association relationships from each of the plurality of texts, the entity words and association relationships extracted from the plurality of texts may be counted to obtain a plurality of entity words and the association relationship therebetween used to construct the knowledge graph.

Exemplarily, as shown in FIG. 3B, the plurality of texts may refer to an online text 305 generated from online information 301, offline information 302, invisible information 303, and missing information 304, for example.

Exemplarily, when the knowledge graph is a knowledge graph for enterprise, the online information 301 may be obtained, for example, in the following manner: sorting out the knowledge sources in the enterprise, and collecting online information in the enterprise. The knowledge sources include, for example, online news notifications, online documents, online meeting minutes, online VCRs, online project introductions, online chat contents, and so on.

Exemplarily, the offline information 302 may include un-uploaded information stored in the employee's office device. The offline information 302 may be converted into online information by online processing of the information (operation S311) by urging the employee to upload.

Exemplarily, the invisible information 303 may include undocumented work experience of the employee. The invisible information may be documented by motivating the employee to perform documentation processing (operation S312) by means of incentives, that is, by encouraging the employee to record work experience and electronically record the work experience. The documented invisible information may be converted into online information through online processing (operation S311).

Exemplarily, the missing information 304 may include, for example, information that is not available in the enterprise and needs to be introduced from outside. The missing information 304 may be, for example, imported into the enterprise from the outside through external crawling, targeted introduction, and so on. For example, the missing information may be imported into the internal server of the enterprise by calling the interface provided by the public knowledge platforms (forum, thesis website, patent website, etc.). Alternatively, the missing information may also be obtained by encouraging employees to create by means of operation and production (operation S313). The information created first needs to be documented (operation S312), and then converted into online information through online processing (operation S311).

After converting the offline information 302, invisible information 303 and missing information 304 into online information, the online information 301 obtained by sorting out the knowledge sources and the online information obtained by conversion may be textualized to obtain a plurality of online texts 305.

According to the embodiment of the present disclosure, in order to improve the construction efficiency of the knowledge graph on the basis of making the constructed knowledge graph cover more knowledge, after the plurality of online texts 305 are obtained, they may be filtered to obtain online texts with high value.

As shown in FIG. 3B, after the online texts 305 are obtained, knowledge filtering (operation S314) and content quality filtering (operation S315) may be performed on the plurality of online texts. The knowledge filtering may be, for example, a filtering to obtain texts with strong knowledge. The content quality filtering may be, for example, a filtering to obtain texts with higher content quality. The content quality filtering may be a further filtering of the texts obtained by the knowledge filtering. Alternatively, the knowledge filtering may be a further filtering of the texts obtained by the content quality filtering.

The knowledge filtering may be carried out, for example, after recognition and understanding of the online texts. For example, text recognition and text understanding may be first performed on the plurality of online texts to determine the category of content described by each of the plurality of online texts. When the text belongs to the text category which may help employees improve their ability (such as professional knowledge category), the knowledge of the text is strong. When the text belongs to the text category which cannot help employees' ability (such as gossip category), the knowledge of the text is weak.

The content quality filtering may be performed after the words contained in the text are classified. For example, if the text includes many sensitive words and forbidden words, the content quality of the text is low. If the text does not include sensitive words and forbidden words, the quality of the text is high.

According to the embodiment of the present disclosure, operation S351 may first extract the entity word representing the entity from each text by using a method similar to operation S220. Then, a semantic relationship between two entities represented by two entity words is extracted from the text, and the semantic relationship is regarded as the association relationship between the two entity words.

According to the embodiment of the present disclosure, when the constructed knowledge graph indicates the first word representing the source of the text, the entity words extracted from the text shall include the first word representing the source of the text. When the text does not include the text source information, in addition to being extracted from the text, the entity words may also be extracted from attribute information of the text. The attribute information of the text may include, for example, author information, creation date information, and the like.

Exemplarily, operation S351 may extract a plurality of entity words and the association relationship therebetween in each text by a deep learning method. The deep learning method may be implemented by using a convolutional neural network model, for example.

Exemplarily, operation S351 may extract the entity words in the text through a predefined template. The predefined template stipulates the rules of extraction of entity words.

In operation S352, the knowledge graph is constructed based on the extracted plurality of entity words and association relationship therebetween.

According to the embodiment of the present disclosure, the operation S352 may first construct a node for each entity word of the plurality of entity words extracted in the operation S351, for example. Then, an associated word in the plurality of entity words having an association relationship with each entity word is determined based on the association relationship between the plurality of entity words. Finally, the node for each entity word and the node for the associated word are connected to form an edge associated with the node for each entity word.

Exemplarily, for the entity word "Java", if the associated words in the plurality of entity words having an association relationship with "Java" contain "JavaWeb", "Android", and " 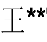 ", the operation S352 may include: connecting the node for the entity word "Java" and the node for the associated word "JavaWeb", connecting the node for the entity word "Java" and the node for the associated word "Android", and connecting the node for the entity word "Java" and the node for the associated word " 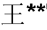 ", thereby forming three edges associated with the node for the entity word "Java", where " 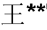 " may be the name of an expert proficient in Java language, or the name of an expert proficient in Android development.

According to the embodiment of the present disclosure, in order to improve the accuracy of information recommendation, a weight may be assigned to each edge connecting two nodes when the knowledge graph is constructed.

FIG. 3C schematically shows a flowchart of constructing the knowledge graph based on the text according to another embodiment of the present disclosure.

As shown in FIG. 3C, the operation S350 of constructing the knowledge graph based on the text according to this embodiment may include operations S353 to S354 in addition to operations S351 to S352. The operations S353 to S354 are performed after the operation S352.

In operation S353, the degree of association between each entity word and the associated word is determined based on the association relationship between the each entity word and the associated word.

In operation S354, the weight is assigned to the edge connecting the node for the each entity word and the node for the associated word based on the degree of association.

According to the embodiment of the present disclosure, operation S353 may determine the degree of association between each word and the keyword, for example, based on the association relationship between the entity represented by each entity word and the entity represented by the associated word in multiple dimensions. If the entity represented by the each entity word and the entity represented by the associated word have an association relationship in many dimensions, the degree of association between the entity word and the associated word is great. If the entity represented by the each entity word and the entity represented by the associated word have an association relationship in few dimensions, the degree of association between the entity word and the associated word is small. The multiple dimensions may include, for example, a geographic dimension, a time dimension, a type dimension, a color dimension, a user experience dimension, and so on.

Exemplarily, for the entity word "apple", the associated words in the plurality of entity words having an association relationship with "apple" contain "pear" and "orange". Both apples and pears are fruits, and both are produced in the north, then apples and pears have association relationship in two dimensions. Both apples and oranges are fruits, but apples are produced in the north and oranges are produced in the south, then apples and oranges have association relationship in one dimension. Therefore, the degree of association between the entity word "apple" and the entity word "pear" is greater than the degree of association between the entity word "apple" and the entity word "orange".

According to the embodiment of the present disclosure, the operation S354 may assign a larger weight to the edge between two nodes for two entity words with a great degree of association, and assign a smaller weight to the edge between two nodes for two entity words with a small association degree. For example, the weight assigned to the edge between the node for the entity word "apple" and the node for the entity word "pear" may be a first weight, and the weight assigned to the edge between the node for the entity word "apple" and the node for the entity word "orange" may be a second weight, where the first weight is greater than the second weight.

Exemplarily, the magnitude of the weight assigned to the edge between two nodes may be proportional to the magnitude of the degree of association between the two entity words being targets of the two nodes.

By assigning the weight to the edge connected with the node for the request entity word at one end and connected with the node for the associated word at the other end, when determining the recommendation information based on the request entity word and the pre-constructed knowledge graph, it is preferred to determine the recommendation information according to the associated word being a target of the node connected with the edge with a large weight. This results in a high degree of matching between the recommendation information determined and the request information, and thus improves user experience.

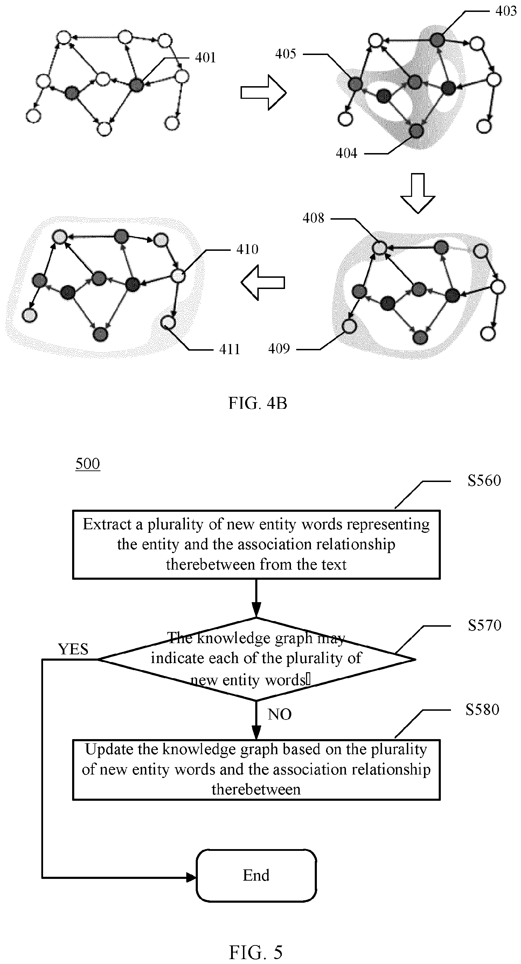

FIG. 4A schematically shows a flowchart of determining recommendation information according to an embodiment of the present disclosure. FIG. 4B schematically shows a diagram of the principle of determining recommendation information based on the knowledge graph according to an embodiment of the present disclosure.

According to the embodiment of the present disclosure, as shown in FIG. 4A, after the knowledge graph is constructed, the operation S230 of determining the recommendation information may include operations S431 to S433.

In operation S431, the node for the request entity word in the knowledge graph is determined as the target node.

According to the embodiment of the present disclosure, by comparing the request entity word with the entity word being a target of each node in the knowledge graph, the node of which the targeted entity word is consistent with the request entity word is determined as the target node.

According to the embodiment of the present disclosure, in the case where a plurality of entity words are used to represent the same entity, a first similarity between the request entity word and the entity word being a target of each node in the knowledge graph may be calculated first, and the node corresponding to the entity word of which the first similarity with the request entity word is greater than the first similarity threshold is determined as the target node. The first similarity may be embodied in any parameter form such as cosine similarity degree and Jaccard similarity coefficient. The first similarity threshold may be set according to actual requirements. For example, in one embodiment, the first similarity threshold may be 0.8.

In operation S432, at least one node connected to the target node is determined according to the edge associated with the target node.

Exemplarily, as shown in FIG. 4B, the target node determined by operation S431 may include a node 401 and a node 402, for example. According to the edges associated with the node 401 and the node 402, at least one node (the nodes covered by the shadow in the upper right corner of FIG. 4B) connected to the target node may be determined, including node 403, node 404, node 405 and node 406. It should be noted that the edges in the knowledge graph shown in 4B are directional. Therefore, when determining the at least one node connected to the target node, it may be specifically that the node that the edge connected to the target node points to is the at least one node. According to actual application scenes, the edges in the knowledge graph of the embodiments of the present disclosure may be non-directional.

In operation S433, the recommendation information is determined based on the entity word being a target of the at least one node.

According to the embodiment of the present disclosure, the recommendation information may be directly generated based on the entity word being a target of the at least one node determined in operation S432. For example, the recommendation information is generated based on the entity word being a target of the at least one node and the category of the entity represented by the entity word. Exemplarily, for the request entity word "Java", if the entity words being a target of the at least one node determined by operation S432 contain "Android" belonging to the operating system category and " 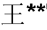 " belonging to the character category, then the recommendation information determined includes, for example, a recommendation statement "applicable to the development of the Android operating system" and a recommendation statement "experts in this field include 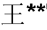 ".

According to the embodiment of the present disclosure, in order to further enrich the recommendation information, when determining the recommendation information based on the entity word being a target of the at least one node, the entity word may be expanded first according to the at least one node, and then the recommendation information is generated based on the expanded entity word and the entity word being a target of the at least one node.

Exemplarily, as shown in FIG. 4B, when the at least one node includes the node 403, node 404, node 405 and node 406, the node connected to the at least one node may be determined first according to the edge associated with the at least one node, so as to make an expansion to the entity word. For example, the nodes connected to the at least one node (the nodes covered by the shadow in the lower right corner of FIG. 4B) include node 407, node 408 and node 409. Then the recommendation information is generated based on the entity words being targets of the nodes connected to the at least one node and the entity word being a target of the at least one node.

Exemplarily, as shown in FIG. 4B, the embodiment of the present disclosure may further expand the entity word twice or more times according to the at least one node, and then generate the recommendation information based on the expanded entity words. For example, the expanded entity words contain entity words being targets of the nodes 407 to 409 and nodes 410 to 411. Finally, the recommendation information is generated based on the expanded entity words and the entity word being a target of the at least one node.

According to the embodiments of the present disclosure, in order to enable the knowledge graph to indicate more abundant information, the embodiment of the present disclosure may also supplement the nodes and edges in the knowledge graph based on incremental data.

FIG. 5 schematically shows a flowchart of updating the knowledge graph according to an embodiment of the present disclosure.

As shown in FIG. 5, in addition to the operations S210 to S240 and operation S350 described above, an information recommendation method 500 of this embodiment may further include operations S560 to S580, so as to update the knowledge graph.

In operation S560, in response to a new text being required, a plurality of new entity words representing the entity and the association relationship between the plurality of new entity words are extracted from the new text.

According to the embodiment of the present disclosure, the new text may be, for example, the text uploaded by the terminal device in real time after the knowledge graph is pre-constructed by the server. The implementation method of this operation S560 is the same as or similar to that of the operation S351 described in FIG. 3A, which will not be repeated here.

In operation S570, it is determined whether the knowledge graph is capable of indicating each new entity word of the plurality of new entity words or not.

According to the embodiment of the present disclosure, the plurality of new entity words extracted from the new text may be compared with the entity word being a target of each node in the knowledge graph, so as to determine whether the plurality of entity words being targets of the plurality of nodes in the knowledge graph include each of the plurality of new entity words or not. When it is determined that the plurality of entity words being targets of the plurality of nodes do not contain a certain new entity word of the plurality of new entity words, it is determined that the knowledge graph fails to indicate the certain new entity word.

In response to the knowledge graph failing to indicate each of the plurality of new entity words, that is, in response to the knowledge graph failing to indicate at least one of the plurality of new entity words, operation S580 is performed to update the knowledge graph based on the plurality of new entity words and the association relationship therebetween. When the knowledge graph is capable of indicating each of the plurality of new entity words, the operation ends, and the knowledge graph is not updated.

Exemplarily, a node for at least one new entity word may be built first, and then a new associated word in the plurality of entity words that has an association relationship with each of the at least one new entity word is determined. Finally, the node for each new entity word and the node for the new associated word are connected to form an edge associated with the node for each new entity word. At this point, the update of the knowledge graph is completed.

Exemplarily, in response to the knowledge graph indicating each of the plurality of new entity words, the embodiment of the present disclosure may also determine, based on the edges in the knowledge graph, whether the knowledge graph is capable of indicating each of the association relationships between the plurality of new entity words or not. When the knowledge graph fails to indicate a partial association relationship of the association relationships between the plurality of new entity words, the edge associated with the node for the new entity word is added to the knowledge graph according to the partial association relationship. For example, if the knowledge graph fails to indicate the association relationship between the new entity words "Pyhton" and "script", but the knowledge graph is capable of indicating the two new entity words, then the edge connecting the node for the new entity word "Python" and the node for the new entity word "script" is added to the knowledge graph, and the knowledge graph is updated.

In order to further enrich the information recommended to the user and realize the intelligent management of knowledge in the enterprise, the embodiment of the present disclosure may perform classification management on the text used to construct the knowledge graph. Exemplarily, the embodiment of the present disclosure may pre-construct a key information structure containing a plurality of information nodes. After the text uploaded by the terminal device is received, the text is classified into the corresponding information node in the key information structure based on the key information contained in the text. In this way, when the user requests information, the text classified into the information node of the key information structure may be fed back to the terminal device as the recommendation information based on the key information in the request information.

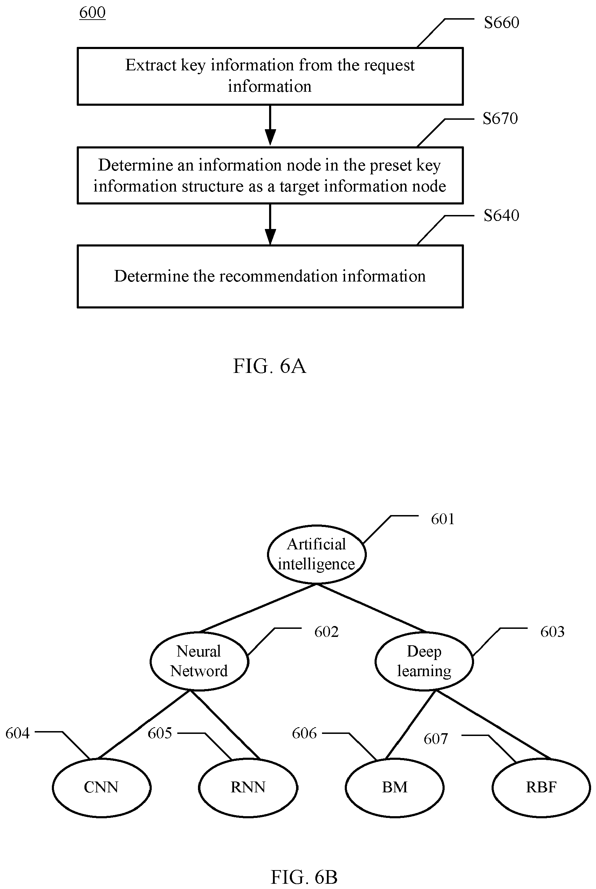

FIG. 6A schematically shows a flowchart of the information recommendation method according to another embodiment of the present disclosure. FIG. 6B schematically shows a diagram of a preset key information structure according to an embodiment of the present disclosure.

As shown in FIG. 6A, in addition to the operations S210 to S240 and operation S350 described above, an information recommendation method 600 of this embodiment may further include operations S660 to S670, for example. Exemplarily, the operations S660 to 670 may be performed synchronously with the operation S220, or may be performed before or after the operation S220, which is not limited in the present disclosure.

In operation S660, the key information is extracted from the request information.

According to the embodiment of the present disclosure, the key information may be obtained by extracting a keyword from the query statement, for example. The keyword may be extracted by using TF-IDF (Term Frequency-Inverse Document Frequency) algorithm, TextRank algorithm, LSA (Latent Semantic Analysis) algorithm, LSI (Latent Semantic Index) algorithm, and so on.

Exemplarily, the embodiment of the present disclosure may extract the key information by using the TextRank algorithm. First, for example, a method similar to operation S220 may be adopted to first perform word segmentation on the request information to obtain a word sequence indicating the request information. Then, a part-of-speech tagging is performed on each word in the word sequence, and the stop words are filtered out. Only the words with specified part of speech, such as nouns, verbs and adjectives are retained. The retained words are used as candidate key information. Then, a candidate key information graph G=(V, E) is constructed, where V is a node set, which is composed of candidate key information. Subsequently, co-occurrence of two pieces of candidate key information is used to construct an edge between any two nodes in the node set. Then, according to the formula of TextRank, the weight of each node in the node set is propagated iteratively until convergence. After that, the nodes in the node set are sorted in reverse order according to the weights, and the most important words are obtained as the key information extracted from the text.

In operation S670, the information node in the preset key information structure that is associated with the key information extracted is determined as a target information node. The key information structure contains a plurality of information nodes each indicate a piece of key information.

According to the embodiment of the present disclosure, as shown in FIG. 6B, the key information structure may be a multi-layer structure, each layer structure includes at least one information node, and the key information indicated by the information nodes at different layers is information of different granularity. For example, the granularity of the key information indicated by the information nodes of each layer structure is arranged from coarse to fine. Exemplarily, the key information structure may be a three-layer structure. The top layer structure includes an information node 601 for indicating the key information "artificial intelligence". The second layer structure includes information node 602 and information node 603, which are used to indicate the key information "neural network" and "deep learning", respectively. The third layer structure includes information node 604, information node 605, information node 606 and information node 607, which are used to indicate the key information "CNN (Convolutional Neural Network)", "RNN (Recurrent Neural Network)", "BM (Boltzmann Machines)" and "RBF (Radial Basis Function), respectively. The information node 604 and information node 605 belong to fine-grained branch nodes of the information node 602, and the information node 606 and information node 607 belong to fine-grained branch nodes of the information node 603. Each information node in the key information structure may have a storage space for storing the text classified to the each information node.

According to the embodiment of the present disclosure, for example, the similarity between the extracted key information and the key information indicated by each information node in the key information structure may be determined first, and the information node indicating the key information with high similarity is determined as the target information node.

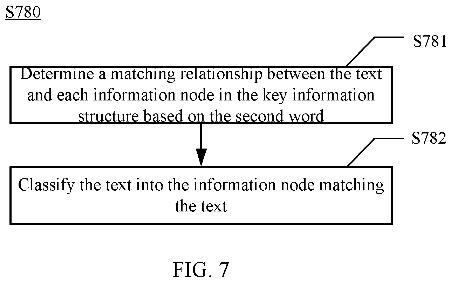

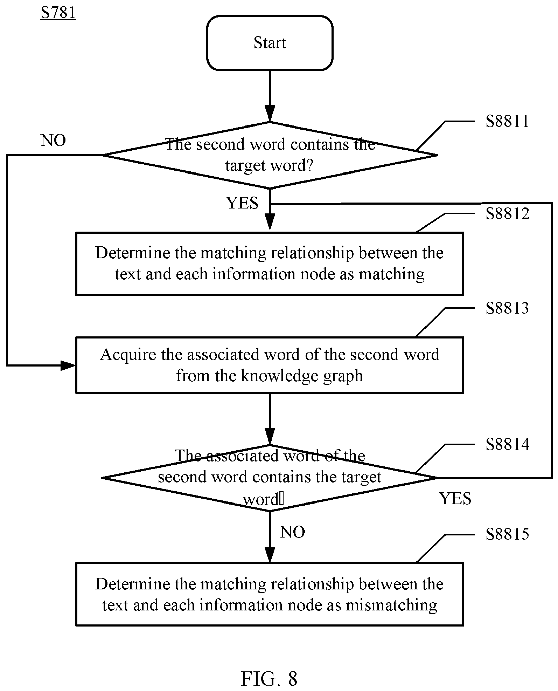

Exemplarily, the operation S670 may be implemented by the process described in the following FIG. 7 or FIG. 8 for example, which will not be repeated here.

Based on the determination of the target information node, the above-mentioned operation S240 of determining the recommendation information may be implemented, for example, by the operation S640 described in FIG. 6A. In operation S640, the recommendation information is determined based on the request entity word, the pre-constructed knowledge graph and the target information node.

According to the embodiment of the present disclosure, the operation S640 may not only determine the recommendation information through the process described in FIG. 6A based on the request entity word and the pre-constructed knowledge graph, but also determine a recommendation text based on the target information node, and use the recommendation text as the recommendation information.

Exemplarily, the determining a recommendation text based on the target information node may include: acquiring the text classified into the target information node, and using the acquired text as the recommendation information.

According to the embodiment of the present disclosure, in order to facilitate the recommendation of texts to the user, the information recommendation method of the embodiment of the present disclosure may also, for example, classify the text into the information node contained in the key information structure when the knowledge graph is constructed based on the text. In this way, it is convenient to recommend texts to the user based on the information nodes, and at the same time realize classification management of texts. The plurality of entity words extracted by operation S351 may include, for example, a second word representing key information of the text. The second word may be, for example, a keyword extracted from the text by a method similar to operation S660.

FIG. 7 schematically shows a flowchart of classifying the text into an information node contained in the key information structure according to an embodiment of the present disclosure.

As shown in FIG. 7, the operation S780 of classifying the text into the information node contained in the key information structure may include, for example, operations S781 to S782.

In operation S781, the matching relationship between the text and each information node in the key information structure is determined based on the second word. In operation S782, the text is classified into the information node matching the text.

According to the embodiment of the present disclosure, the matching relationship between the text and the each information node may be determined based on the similarity relationship between the second word of the plurality of entity words and the key information indicated by the each information node. The information node matching the text is determined based on the matching relationship, and the text is stored in the storage space corresponding to the information node matching the text.

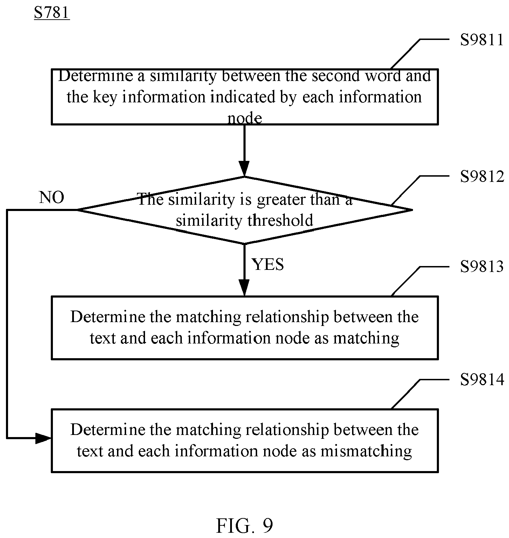

Exemplarily, the operation S781 may be implemented, for example, by the process described in the following FIG. 8 or the process described in the following FIG. 9, which will not be described in detail here.

According to the embodiment of the present disclosure, similar to the aforementioned knowledge graph, the preset key information structure may be supplemented according to the incremental data, for example. For example, the information recommendation method of this embodiment may first perform the operation of extracting the key information of the new text from the new text in response to the new text being acquired, and use the extracted keywords as the new key information. The implementation of this operation is similar to that of the aforementioned operation S660, which will not be repeated here. After the new key information is extracted, it is determined whether the key information structure contains the information node indicating the new key information or not. If not, the key information structure is updated based on the new key information.

Exemplarily, the information node for the new key information may be added based on the association relationship between the new key information and the key information in the key information structure indicated by the plurality of information nodes. For example, if the new key information is "LSTM", according to the subordination between the new key information "LSTM" and the key information "RNN" indicated by the information node 605 in FIG. 6B, a branch node belonging to the information node 605 is added to the lower structure of the information node 605 as the information node for "LSTM".

FIG. 8 schematically shows a flowchart of determining a matching relationship between the text and each information node in the key information structure according to an embodiment of the present disclosure.

As shown in FIG. 8, in one embodiment, operation S781 of determining the matching relationship between the text and each information node in the key information structure may include operations S8811 to S8812 starting from operation S8811.

In operation S8811, it is determined whether the second words contain a target word identical with the key information indicated by the each information node or not.

According to the embodiment of the present disclosure, the second word may be compared with the key information indicated by each information node in the key information structure. If the second word is consistent with the key information, the second word is determined as the target word.

Exemplarily, the entity words extracted from the text may include a plurality of second words. This embodiment may compare each of the plurality of second words with the key information indicated by each information node in the key information structure, and determine whether the second words contain the target word or not.

When the second words contain the target word, operation S8812 is performed, and the matching relationship between the text and each information node is determined as matching.

Considering that the same word may have different expressions for different scenes, in order to avoid the inability to accurately determine the matching relationship between the text and the information node due to the difference between the expression of the word indicated by the information node contained in the key information structure and that of the second word, the operation of determining the matching relationship between the text and each information node in the key information structure according to this embodiment may further include operation S8813 to S8815 in addition to the operations S8811 to S8812. Accordingly, the knowledge graph may have nodes for different expressions of the same word, for example. Exemplarily, the nodes in the knowledge graph include not only nodes for the entity "CNN", but also nodes for the entity "convolutional neural network".

In response to the second word not containing the target word, operation S8813 is performed to acquire the associated word of the second word from the knowledge graph. Exemplarily, the node in the knowledge graph for indicating the second word may be determined first. Then, the associated word of the second word is determined based on the edge associated with the node indicating the second word. For example, the entity word indicated by the node connected with the associated edge is used as the associated word.

In operation S8814, it is determined whether the associated words of the second words contain the target word or not. The implementation method of the operation S8814 is similar to that of the operation S8811, which will not be repeated here.

In response to the associated words of the second words containing the target word, operation S8812 is performed to determine the matching relationship between the text and each information node as matching.

In response to the associated word of the second word not containing the target word, operation S8815 is performed to determine the matching relationship between the text and each information node as mismatching.

According to the embodiment of the present disclosure, when the matching relationship between the text and the information node is determined, by acquiring the associated word of the second word in the text based on the knowledge graph, the words used for matching may more comprehensively reflect the content of the text, thereby improving the accuracy of determining the matching relationship between the text and the information node.

FIG. 9 schematically shows a flowchart of determining the matching relationship between the text and each information node in the key information structure according to another embodiment of the present disclosure.

As shown in FIG. 9, in another embodiment, operation S781 of determining the matching relationship between the text and each information node in the key information structure may include operations S9811 to S9814.

In operation S9811, a similarity between the second word and the key information indicated by the each information node is determined.

According to the embodiment of the present disclosure, this operation may obtain the similarity between the second word and the key information indicated by each information node, for example, by calculating the cosine similarity and the Jaccard similarity coefficient therebetween. Exemplarily, when the plurality of entity words contain a plurality of second words, the operation S9811 obtains a plurality of similarities to determine the similarity between each of the second words and the key information indicated by each information node.

In operation S9812, it is determined whether the similarity is greater than the similarity threshold or not. The similarity threshold may be set according to the actual needs, which is not limited in the present disclosure. Exemplarity, the similarity threshold may be 0.9.

In response to the similarity being greater than the similarity threshold, operation S9813 is performed to determine the matching relationship between the text and the each information node as matching. In response to the similarity being not greater than the similarity threshold, operation S9814 is performed to determine the matching relationship between the text and the each information node as mismatching.

Exemplarily, when the plurality of entity words contain a plurality of second words, the operation S9812 may determine whether the plurality of similarities include a similarity greater than the similarity threshold or not. If it is included, operation S9813 is performed, or if not, operation S9814 is performed.

Through the above process, the embodiment of the disclosure may extract the keyword from the text, and then determine the matching information node in the key information structure according to the keyword. Finally, the text is stored in the storage space corresponding to the information node matching the text. When a plurality of keywords are extracted from the text, a plurality of matching information nodes may be obtained from the key information structure. In this case, the text is copied into multiple copies and stored in the storage spaces corresponding to the plurality of matching information nodes.

Exemplarily, in order to avoid occupying too much storage space, a text list may be maintained for each information node. The text list includes the bibliography and the like of the text that may be classified into the information node. When the recommendation information is determined and the text is pushed to the terminal device, the text may be obtained according to the text list of the information node.

It can be understood that the information recommendation method provided by the embodiment of the present disclosure may be applied to a variety of application scenes. For example, the information recommendation method may be applied to at least one of the following application scenes: an application scene for knowledge retrieval, an application scene for knowledge Q & A, and an application scene for active recommendation of information.

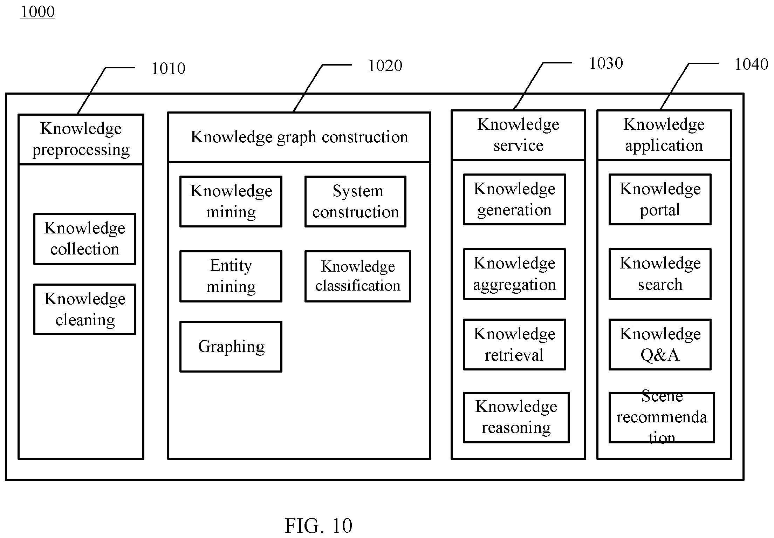

FIG. 10 schematically shows a system architecture diagram for implementing the information recommendation method according to an embodiment of the present disclosure.

As shown in FIG. 10, a system architecture 1000 for implementing the information recommendation method of this embodiment may include a knowledge preprocessing module 1010, a knowledge graph constructing module 1020, a knowledge service module 1030, and a knowledge application module 1040, for example.

The knowledge preprocessing module may be used, for example, to first collect information as knowledge through the process described in FIG. 3B, so that various information form online knowledge. Then, knowledge cleaning is conducted on the formed online knowledge, and only the online knowledge with strong knowledge and high content quality is retained.

The knowledge graph constructing module 1020 may be used, for example, to construct the knowledge graph by executing the process described in FIG. 3A. For example, the knowledge obtained by the knowledge preprocessing module 1010 is mined first. Through the knowledge mining, for example, various variations of the online knowledge may be obtained. Exemplarily, if the online knowledge is knowledge expressed in Chinese, knowledge expressed in English, for example, may be obtained through the knowledge mining. After the knowledge mining, entity mining is performed on the online knowledge and the knowledge obtained by mining, that is, a plurality of entity words and the association relationship therebetween are extracted from the knowledge. Finally, the information obtained by entity mining is graphed to obtain the knowledge graph. The graphing process may be implemented, for example, by the operation S352 described above.

Exemplarily, the knowledge graph constructing module 1020 may also be used to construct a knowledge classification system for knowledge classification. For example, the knowledge graph constructing module 1020 may be used to classify the text as knowledge through the process described in FIG. 7 to realize the construction of the knowledge classification system.

The knowledge service module 1030 may, for example, first generate knowledge elements in the knowledge recommended to the user based on the knowledge graph. The knowledge elements generated may include the entity words obtained by the process described in FIG. 4A. Subsequently, the knowledge elements generated are aggregated, for example, the knowledge aggregation may be performed through the aforementioned operation S433. At the same time, the knowledge service module 1030 may also retrieve knowledge from the knowledge classification system. The knowledge retrieval may be accomplished, for example, through the process described in FIG. 6A, and the text classified into the target information node may be obtained through the retrieval. It should be noted that in the process of knowledge retrieval, if the text cannot be obtained from the knowledge classification system, the knowledge retrieval may be performed again after knowledge reasoning. The knowledge reasoning may be accomplished, for example, through the operation S8813 described in FIG. 8.

Based on the functions of the knowledge service module 1030, the knowledge application module 1040 may provide the user with a "knowledge portal" functional module, a "knowledge retrieval" functional module, a "knowledge Q&A" functional module, and a "scene recommendation" functional module through the terminal device. Through the "knowledge portal" functional module, the user may upload and download knowledge, for example. Through the "knowledge retrieval" functional module, the user may, for example, input search statements to retrieve the desired knowledge from the knowledge graph and the knowledge classification system. Through the "knowledge Q&A" functional module, the user may, for example, input query statements to obtain knowledge that may solve puzzles from the knowledge graph and the knowledge classification system. Through the "scene recommendation" functional module, the terminal device may recommend knowledge suitable for the user to the user according to the user's preferences, for example.

In summary, the embodiments of the present disclosure may provide a complete solution for the intelligent management and application of enterprise knowledge through the construction of the system architecture adapted for implementing the information recommendation method. It may effectively filter and aggregate the scattered and fragmented documents in the enterprise, realize the systematic management of knowledge and the construction of enterprise knowledge graph, so as to further fully integrate the enterprise knowledge graph and the work scene, realize the intelligent application of work scene knowledge, and improve the efficiency of enterprise knowledge production and application.

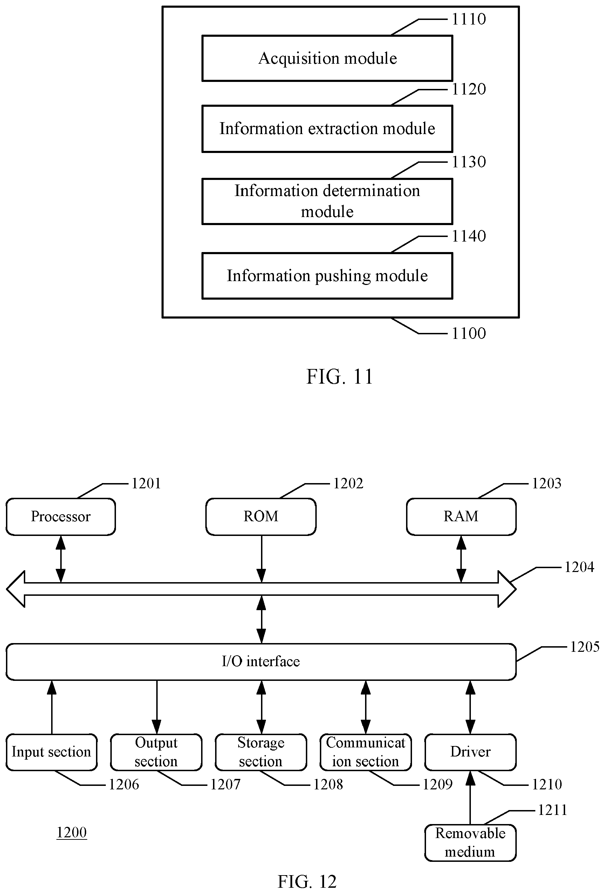

FIG. 11 schematically shows a structure block diagram of an information recommendation apparatus according to an embodiment of the present disclosure.

As shown in FIG. 11, an information recommendation device 1100 of this embodiment may include, for example, an acquisition module 1110, an information extraction module 1120, an information determination module 1130 and an information pushing module 1140.

The acquisition module 1110 is used to acquire request information; In one embodiment, the acquisition module 1110 may be used to perform the operation S210 described in FIG. 2, which will not be repeated here.

The information extraction module 1120 is used to extract the request entity word representing the entity from the request information. In one embodiment, the information extraction module 1120 may be used to perform the operation S220 described in FIG. 2, which will not be repeated here.

The information determination module 1130 is used to determine the recommendation information based on the request entity word and the pre-constructed knowledge graph. The knowledge graph is constructed based on the text, and the knowledge graph indicates the first word representing the source of the text. In one embodiment, the information determination module 1130 may be used to perform the operation S230 described in FIG. 2, which will not be repeated here.

The information pushing module 1140 is used to push the recommendation information. In one embodiment, the information pushing module 1140 may be used to perform the operation S240 described in FIG. 2, which will not be repeated here.

According to the embodiment of the present disclosure, the information recommendation apparatus 1100 may further include, for example, a graph construction module for constructing the knowledge graph based on text. For example, the graph construction module may be used to perform the processes described in FIG. 3A and FIG. 3C, which will not be repeated here.

According to the embodiment of the present disclosure, the aforementioned information determining module 1130 may be used, for example, to perform the process described in FIG. 4A and/or the operation S640 described in FIG. 6A, which will not be repeated here.

According to the embodiment of the present disclosure, the aforementioned information extraction module 1120 may also be used to perform the operation S560 described in FIG. 5, for example. The information recommendation apparatus 1100 may further include a determination module and an update module, for example. The determination module may be used to perform the operation S570 described in FIG. 5, for example, and the update module may be used to perform the operation S580 described in FIG. 5, for example, which will not be repeated here.

According to the embodiment of the present disclosure, the aforementioned information extraction module 1120 may also be used to perform the operation S660 described in FIG. 6A, for example. The information recommendation apparatus 1100 may further include, for example, a node determining module configured to perform the operation S670 described in FIG. 6A, which will not be repeated here.

According to the embodiment of the present disclosure, the information recommendation apparatus 1100 may further include a text classification module configured to classify the text into the information node contained in the key information structure. The text classification module may be used, for example, to perform the operations S781 to S782 described in FIG. 7, which will not be repeated here.

According to the embodiment of the present disclosure, the text classification module may determine the matching relationship between the text and each information node in the key information structure, for example, through the process described in FIG. 8 or the process described in FIG. 9, which will not be repeated here.

Any number of the modules, sub modules, units and sub units according to the embodiments of the present disclosure, or at least part of the functions of any number of them may be implemented in one module. Any one or more of the modules, sub modules, units and sub units according to the embodiments of the present disclosure may be split into multiple modules for implementation. Any one or more of the modules, sub modules, units and sub units according to the embodiments of the present disclosure may be implemented at least partially as a hardware circuit, such as a field programmable gate array (FPGA), a programmable logic array (PLA), a system on a chip, a system on a substrate, a system on a package, an Application Specific Integrated Circuit (ASIC), or may be implemented by hardware or firmware in any other reasonable way that integrates or encapsulates the circuit, or may be implemented by any one of the three implementation modes of software, hardware and firmware or an appropriate combination thereof. Alternatively, one or more of the modules, sub modules, units and sub units according to the embodiments of the present disclosure may be at least partially implemented as a computer program module that, when executed, perform the corresponding functions.

FIG. 12 schematically shows a block diagram of an electronic device adapted for performing the information recommendation method according to an embodiment of the present disclosure.

As shown in FIG. 12, an electronic device 1200 according to the embodiment of the present disclosure includes a processor 1201, which may execute various appropriate actions and processing according to the program stored in a read only memory (ROM) 1202 or the program loaded into a random access memory (RAM) 1203 from a storage section 1208. The processor 1201 may, for example, include a general-purpose microprocessor (for example, CPU), an instruction set processor and/or a related chipset and/or a special-purpose microprocessor (for example, an application specific integrated circuit (ASIC)), and the like. The processor 1201 may also include an on-board memory for caching purposes. The processor 1201 may include a single processing unit or multiple processing units for executing different actions of the method flow according to the embodiments of the present disclosure.

Various programs and data required for the operation of the electronic device 1200 are stored in the RAM 1203. The processor 1201, the ROM 1202 and the RAM 1203 are connected to each other through a bus 1204. The processor 1201 executes various operations of the method flow according to the embodiments of the present disclosure by executing the programs in the ROM 1202 and/or the RAM 1203. It should be noted that the program may also be stored in one or more memories other than the ROM 1202 and the RAM 1203. The processor 1201 may also execute various operations of the method flow according to the embodiments of the present disclosure by executing the programs stored in the one or more memories.

According to the embodiment of the present disclosure, the electronic device 1200 may further include an input/output (I/O) interface 1205 which is also connected to the bus 1204. The electronic device 1200 may further include one or more of the following components connected to the I/O interface 1205: an input section 1206 including a keyboard, a mouse, etc.; an output section 1207 including a cathode ray tube (CRT), a liquid crystal display (LCD), etc. and a speaker, etc.; a storage section 1208 including a hard disk, etc.; and a communication section 1209 including a network interface card such as a LAN card, a modem, and the like. The communication section 1209 performs communication processing via a network such as the Internet. A drive 1210 is also connected to the I/O interface 1205 as required. A removable medium 1211, such as a magnetic disk, an optical disk, a magneto-optical disk, a semiconductor memory, and the like, is installed on the drive 1210 as required, so that the computer program read therefrom is installed into the storage section 1208 as needed.

The method flow according to the embodiments of the present disclosure may be implemented as a computer software program. For example, the embodiments of the present disclosure include a computer program product including a computer program carried on a computer-readable storage medium. The computer program includes a program code for execution of the method shown in the flowchart. In such an embodiment, the computer program may be downloaded and installed from the network through the communication section 1209, and/or installed from the removable medium 1211. When the computer program is executed by the processor 1201, the above-mentioned functions defined in the electronic device of the embodiment of the present disclosure are performed. According to the embodiments of the present disclosure, the above-described systems, apparatuses, devices, modules, units, etc. may be implemented by computer program modules.

The present disclosure also provides a computer-readable storage medium, which may be included in the apparatus/device/system described in the above embodiments; or exist alone without being assembled into the apparatus/device/system. The above-mentioned computer-readable storage medium carries one or more programs that when executed, perform the method according to the embodiments of the present disclosure.

According to the embodiments of the present disclosure, the computer-readable storage medium may be a non-volatile computer-readable storage medium, for example, may include but not limited to: portable computer disk, hard disk, random access memory (RAM), read-only memory (ROM), erasable programmable read-only memory (EPROM or flash memory), portable compact disk read-only memory (CD-ROM), optical storage device, magnetic storage device, or any suitable combination of the above. In the present disclosure, the computer-readable storage medium may be any tangible medium that includes or stores programs that may be used by or in combination with an instruction execution system, apparatus, or device. For example, according to the embodiments of the present disclosure, the computer-readable storage medium may include the above-mentioned ROM 1202 and/or RAM 1203 and/or one or more memories other than the ROM 1202 and RAM 1203.

The flowcharts and block diagrams in the accompanying drawings illustrate the possible architecture, functions, and operations of the system, method, and computer program product according to various embodiments of the present disclosure. In this regard, each block in the flowcharts or block diagrams may represent a part of a module, program segment, or code, which part includes one or more executable instructions for implementing the specified logical function. It should also be noted that, in some alternative implementations, the functions noted in the blocks may also occur in a different order than that noted in the accompanying drawings. For example, two blocks shown in succession may actually be executed substantially in parallel, or they may sometimes be executed in the reverse order, depending on the functions involved. It should also be noted that each block in the block diagrams or flowcharts, and the combination of blocks in the block diagrams or flowcharts, may be implemented by a dedicated hardware-based system that performs the specified functions or operations, or may be implemented by a combination of dedicated hardware and computer instructions.

The embodiments of the present disclosure have been described above. However, these embodiments are for illustrative purposes only, and are not intended to limit the scope of the present disclosure. Although the embodiments have been described separately above, this does not mean that measures in the respective embodiments cannot be used in combination advantageously. The scope of the present disclosure is defined by the appended claims and their equivalents. Without departing from the scope of the present disclosure, those skilled in the art may make various substitutions and modifications, and these substitutions and modifications should all fall within the scope of the present disclosure.

## Claims

1. An information recommendation method, comprising:
acquiring request information;
extracting a request entity word representing an entity from the request information;
determining recommendation information based on the request entity word and a pre-constructed knowledge graph; and
pushing the recommendation information,
wherein the knowledge graph is constructed based on a text, and the knowledge graph indicates a first word representing a source of the text.

2. The method according to claim 1, further comprising constructing the knowledge graph based on the text;
wherein the constructing the knowledge graph based on the text further comprises:
extracting, from the text, a plurality of entity words representing the entity and an association relationship between the plurality of entity words, wherein the plurality of entity words contain the first word; and
constructing the knowledge graph based on the extracted plurality of entity words and association relationship between the plurality of entity words.

3. The method according to claim 2, wherein the constructing the knowledge graph further comprises: for each entity word of the plurality of entity words,
constructing a node for the each entity word;
determining an associated word in the plurality of entity words based on the association relationship between the plurality of entity words, the associated word having an association relationship with the each entity word; and
connecting the node for the each entity word and a node for the associated word, so as to form an edge associated with the node for the each entity word.

4. The method according to claim 2 or 3,
wherein the constructing the knowledge graph further comprises:
determining a degree of association between the each entity word and the associated word based on the association relationship between the each entity word and the associated word; and
assigning, based on the degree of association, a weight to the edge connecting the node for the each entity word and the node for the associated word,
wherein the degree of association is proportional to the weight; or
wherein the determining recommendation information further comprises:
determining a node for the request entity word in the knowledge graph as a target node;
determining, based on an edge associated with the target node, at least one node connected with the target node; and
determining the recommendation information based on an entity word being a target of the at least one node.

5. The method according to any of claims 2 to 4, further comprising:
extracting, in response to a new text being acquired, a plurality of new entity words representing the entity and an association relationship between the plurality of new entity words from the new text; and
updating the knowledge graph based on the plurality of new entity words and the association relationship between the plurality of new entity words in response to the knowledge graph failing to indicate at least one of the plurality of new entity words.

6. The method according to any of claims 2 to 5, further comprising:
extracting key information from the request information; and
determining an information node in a preset key information structure as a target information node, wherein the information node is associated with the key information extracted, and the key information structure contains a plurality of information nodes each indicate a piece of key information,
wherein the determining recommendation information further comprises: determining the recommendation information based on the request entity word, the pre-constructed knowledge graph and the target information node.

7. The method according to any of claims 2 to 6, wherein the plurality of entity words further contain at least one second word for representing the key information of the text;
wherein the method further comprises: classifying the text into an information node contained in the key information structure, comprising:
determining a matching relationship between the text and each information node in the key information structure based on the second word; and
classifying the text into an information node matching the text.

8. The method according to any of claims 2 to 7, wherein the plurality of entity words contain a plurality of second words; wherein the determining a matching relationship between the text and each information node in the key information structure comprises:
determining whether the second words contain a target word identical with key information indicated by the each information node or not; and
determining the matching relationship between the text and the each information node as matching in response to the second words containing the target word.

9. The method according to any of claims 2 to 8, wherein the determining a matching relationship between the text and each information node in the key information structure further comprises:
acquiring an associated word of the second words from the knowledge graph in response to the second words not containing the target word; and
determining the matching relationship between the text and the each information node as matching in response to the associated words of the second words containing the target word.

10. The method according to any of claims 2 to 9, wherein the determining a matching relationship between the text and each information node in the key information structure comprises:
determining a similarity between the second word and key information indicated by the each information node; and
determining the matching relationship between the text and the each information node as matching in response to the similarity being greater than a similarity threshold.

11. The method according to any of claims 2 to 10, further comprising:
extracting, in response to a new text being acquired, new key information of the new text from the new text; and
updating the key information structure based on the new key information in response to the key information structure not containing an information node indicating the new key information.

12. The method according to any of claims 2 to 11, wherein the determining recommendation information comprises:
acquiring a text classified into the target information node, as the recommendation information.

13. An information recommendation apparatus, comprising:
an acquisition module configured to acquire request information;
an information extraction module configured to extract a request entity word representing an entity from the request information;
an information determination module configured to determine recommendation information based on the request entity word and a pre-constructed knowledge graph; and
an information pushing module configured to push the recommendation information,
wherein the knowledge graph is constructed based on a text, and the knowledge graph indicates a first word representing a source of the text.

14. An electronic device, comprising:
one or more processors;
a storage device for storing one or more programs,
wherein the one or more programs, when executed by the one or more processors, cause the one or more processors to perform the method according to any of claims 1 to 12.

15. A non-transitory computer-readable storage medium having executable instructions stored thereon that, when executed by a processor, cause the processor to perform the method according to any of claims 1 to 12.
